# FASCICULE DE BREVET EUROPEEN

(11) **EP 0 517 598 B1**
(45) Date de publication et mention de la délivrance du brevet: **03.01.1996**
(21) Numéro de dépôt: 92401538.1
(22) Date de dépôt: 04.06.1992
(51) Int. Cl.: B60Q 1/00

(54) **Dispositif de fixation d'un organe d'éclairage ou de signalisation de véhicule automobile avec compensation de tolérances**
Befestigungseinrichtung für Beleuchtungs- oder Signalierungsanlage für Fahrzeuge mit Kompensierungsmitteln
Mounting device for lighting or signal device for vehicle with compensation means

(30) Priorité: 06.06.1991 FR 9106862
(43) Date de publication de la demande: 09.12.1992
(73) Titulaire: VALEO VISION, F-93000 Bobigny (FR)
(72) Inventeur: Blancheton, Lucien, F-89100 Sens (FR)
(74) Mandataire: Martin, Jean-Jacques

(56) Documents cités:
- DE-A- 2 656 755
- FR-A- 2 177 382
- FR-A- 2 630 059
- GB-A- 2 130 352

## Description

La présente invention concerne d'une façon générale le montage des organes d'éclairage ou de signalisation lumineuse dans les véhicules automobiles.

En particulier, mais non exclusivement, l'invention concerne le montage d'un feu de signalisation devant s'adapter à un environnement comportant soit des parties fixes, dont la géométrie, les dimensions ou les écartements peuvent varier dans certaines limites, du fait de dispersions de fabrication, soit des parties fixes et des parties mobiles. Elle s'applique tout particulièrement au montage d'un feu accolé à un projecteur et devant occuper une position bien déterminée par rapport à la carrosserie du véhicule.

Lors du montage d'un feu de signalisation axiale et latérale à côté d'un projecteur, trois critères au moins doivent généralement être respectés:
- on doit assurer un espacement uniforme, de préférence un accolement, entre les bords adjacents de la glace du projecteur et de celle du feu;
- on doit assurer un jeu ou espacement uniforme entre le bord supérieur et le bord latéral (opposé au projecteur) de la glace du feu, d'une part, et une découpe bordée ou analogue ménagée dans l'aile du véhicule;
- on doit assurer un désaffleurement contrôlé de la glace du feu par rapport à la surface extérieure de l'aile, c'est-à-dire que, par exemple à mi-hauteur de la glace, celle-ci doit être en retrait vers l'intérieur d'une distance bien déterminée par rapport à la surface de l'aile.

Ces objectifs sont actuellement difficilement atteints. En effet, habituellement, le projecteur est fixé sur une tôle porte-projecteur elle-même assemblée par exemple par soudure sur un élément de doublage intérieur de l'aile, et enfin cet élément de doublage est soudé ou vissé sur l'aile proprement-dite. Et les tolérances de fabrication des diverses pièces concernées et les dispersions d'assemblage sont telles que les principes de fixation actuellement connus, ou bien sont simples et ne permettent pas de satisfaire à tous les critères indiqués, ou bien sont complexes et coûteux et comportent des moyens de réglage dont la mise en oeuvre est longue et fastidieuse.

On connaît enfin par le document GB-A-2 130 352 un dispositif de fixation selon le préambule de la revendication 1.

Ce dispositif connu n'est toutefois pas capable d'assurer une transition généralement continue et affleurante entre un organe d'éclairage ou de signalisation et la partie adjacente du véhicule.

La présente invention a pour objet de résoudre les inconvénients de l'art antérieur. Elle propose à cet effet un dispositif de fixation tel que défini dans la revendication 1.

En ce qui concerne les états désignés DE, ES et GB, la demande EP-A-0 504 626 publiée le 23.09.92 divulgue un état de la technique tel que visé au paragraphe 3 de l'article 54 CBE. L'objet de la revendication 1 dans sa version destinée auxdits états en diffère en ce que l'effort élastique est orienté dans une direction qui s'éloigne d'un plan général contenant la deuxième zone d'appui.

Des aspects préférés, mais non limitatifs, de ce dispositif de fixation sont définis dans les sous-revendications 2 à 9.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est une vue en perspective schématique d'un coin avant d'un véhicule automobile comportant un projecteur et un feu dit feu d'aile accolé latéralement au projecteur,
la figure 2 est une vue en élévation de face de la région du feu,

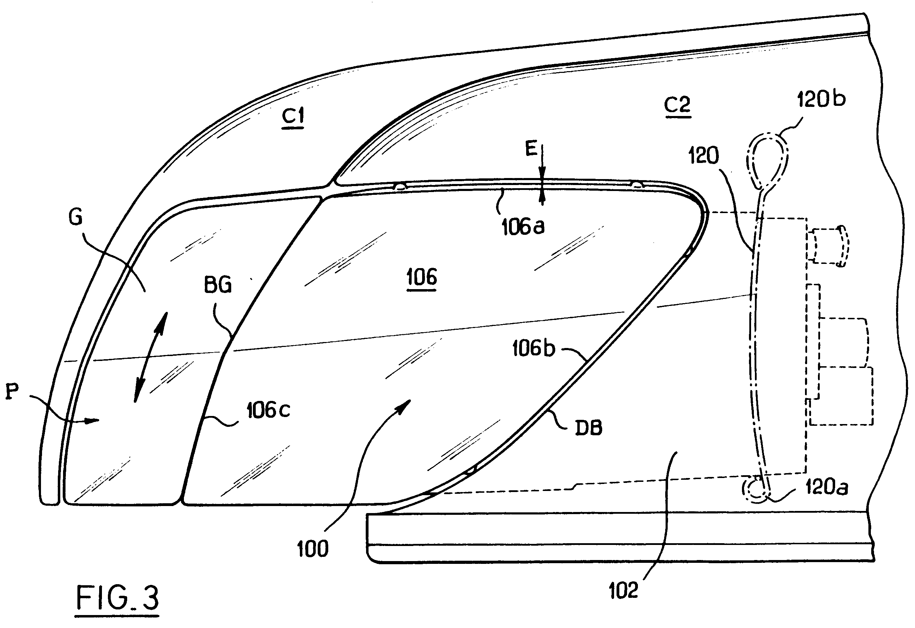

la figure 3 est une vue en élévation de côté de la région du feu,
la figure 4 est une vue en plan de dessus partiellement arrachée de la région du feu,

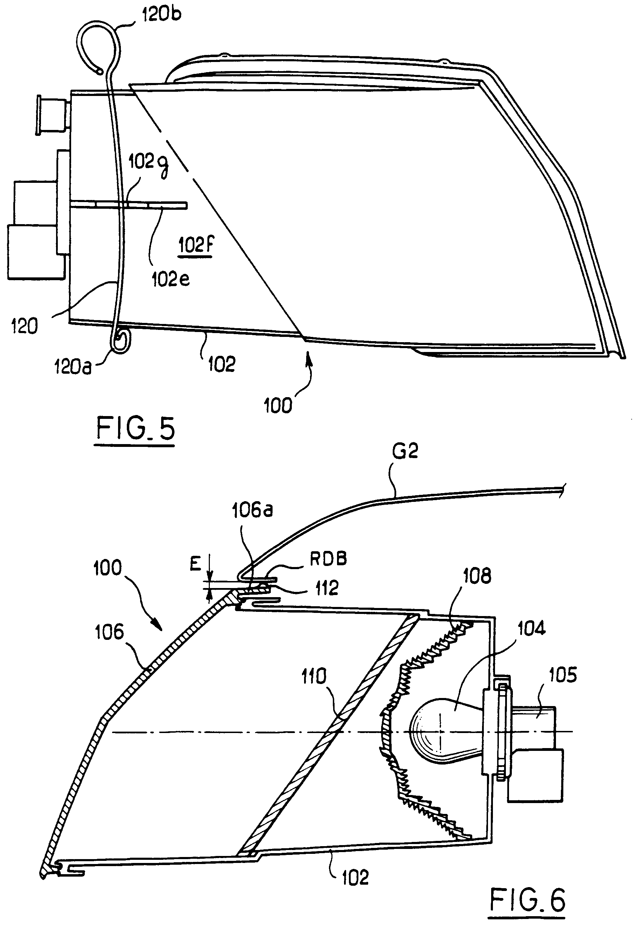

la figure 5 est une vue en élévation de côté du feu, faite à partir du projecteur, et
la figure 6 est une vue en coupe verticale axiale du feu.

En référence aux dessins, on a représenté partiellement une carrosserie C de véhicule qui comprend un capot C1 et une aile C2.

Le projecteur P comporte une glace G se terminant vers l'extérieur par un bord BG essentiellement rectiligne et de préférence vertical.

Le feu de signalisation 100, par exemple un feu indicateur de changement de direction, comprend un boîtier 102, une lampe 104 montée sur une douille porte-lampe 105, une glace ou globe 106 et des éléments optiques 108 et 110, dont l'un est par exemple teinté, pour engendrer à partir de la lumière de la lampe un faisceau de couleur et de répartition lumineuse appropriées, de façon classique en soi.

La glace 106 est assemblée rigidement au boîtier 102. Elle est pourvue dans le présent exemple, de façon classique en soi, de quatre bossages dont deux, indiqués en 112, sont prévus sur un rebord intérieur 106a prévu dans sa région supérieure et dont deux autres, indiqués en 114, sont prévus sur un rebord intérieur 106b prévu dans sa région latérale opposée au projecteur P.

Ces bossages, d'une hauteur bien déterminée par exemple de quelques millimètres, sont destinés, en s'appliquant contre un rebord intérieur RDB d'une découpe bordée DB formée dans l'aile C2 pour recevoir le feu lors du montage de celui-ci, à ménager un jeu ou espacement uniforme, désigné par E, entre les bords supérieur et latéral de la glace et ladite découpe bordée DB pour recevoir le feu. Pour que ces bossages soit aussi imperceptibles que possible, on les ménage sur les rebords 106a, 106b aussi loin que possible de la face frontale de la glace.

Le bord 106c de la glace 106 situé du côté du projecteur est de préférence rectiligne et vertical et est destiné dans le présent exemple à être intimement accolé contre le bord adjacent BG de la glace du projecteur.

En variante, on pourrait également envisager un espacement uniforme et non nul entre les deux glaces, par exemple par des bossages du même type que décrit plus haut.

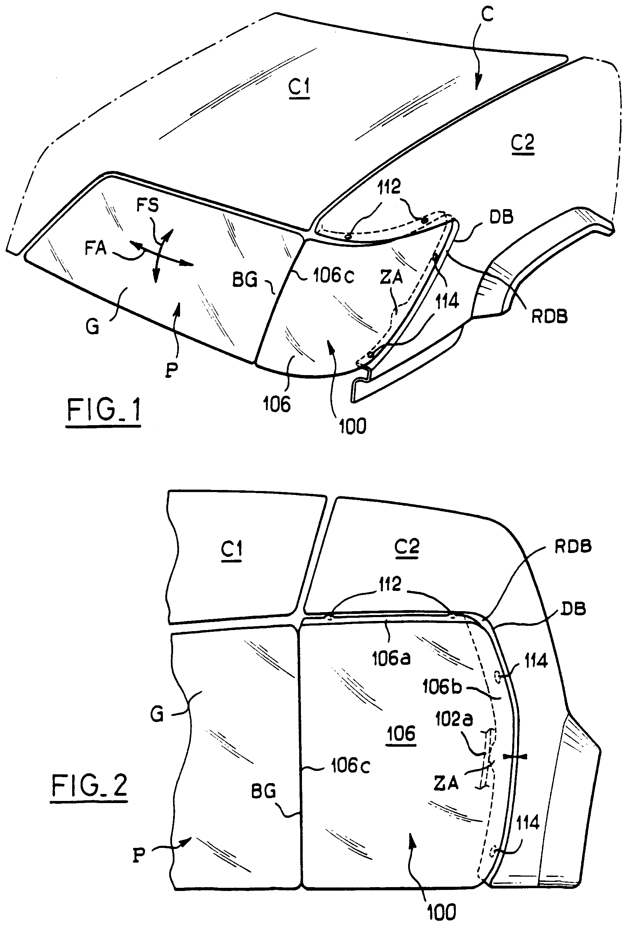

Comme on l'observe bien sur les figures 1, 2 et 4, le rebord intérieur RDB de la découpe DB présente, dans sa partie correspondant au bord latéral extérieur de la glace du feu et approximativement à mi-hauteur, une zone élargie vers l'intérieur, suivant un profil courbe. Cette zone, désignée par la référence ZA, est conçue pour qu'une paroi latérale 102a du boîtier du feu (représentée partiellement sur la figure 2) vienne prendre appui contre son sommet. En fixant soigneusement la distance entre ce sommet et la surface extérieure de l'aile C2, on assure le désaffleurement de la glace 106 du feu par rapport à ladite surface.

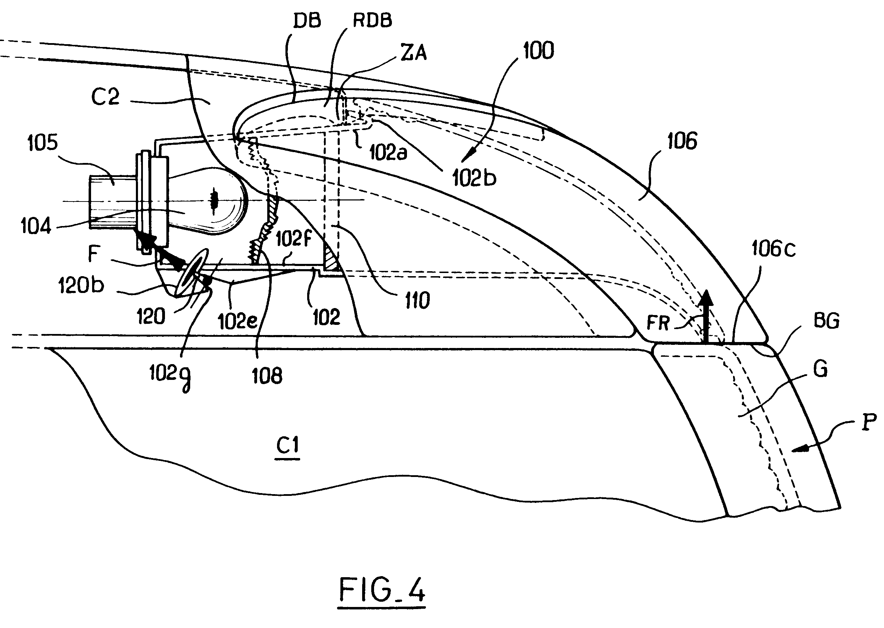

On observe par ailleurs que le boîtier 102, dans sa région d'appui contre la partie ZA, comporte une patte saillante 102b de section horizontale approximativement en forme de U, dont une branche située à l'extérieur peut venir prendre appui par son extrémité libre contre la surface antérieure du rebord RDB, comme le montre la figure 4.

Selon un aspect essentiel de l'invention, afin d'assurer les divers contacts et appuis décrits ci-dessus, il est prévu un ressort de poussée 120 réalisé dans le présent exemple sous forme d'une tige flexible d'orientation essentiellement verticale, prenant appui à ses extrémités supérieure et inférieure sur la carrosserie du véhicule et dans une région médiane sur le boîtier 102 du feu.

Plus précisément, l'extrémité inférieure du ressort comporte une boucle 120a solidarisée par tout moyen approprié à la carrosserie (par exemple en pénétrant dans une fente spécialement ménagée) et son extrémité supérieure comporte une boucle 120b qui peut par exemple prendre appui dans une ferrure ouverte (non illustrée) spécialement prévue dans la carrosserie.

Le boîtier 102 comporte une nervure 102e s'étendant dans un plan essentiellement horizontal et approximativement à mi-hauteur le long de la paroi latérale intérieure 102f dudit boîtier. Dans cette nervure 102e est ménagée une encoche 102g dont la section est légèrement supérieure à celle du ressort-tige 120 et dans laquelle la région médiane dudit ressort vient s'engager. La position des points d'ancrage du ressort et de l'encoche 102g sont telles que le ressort, lors de sa mise en place, est mis sous tension pour exercer sur le boîtier une sollicitation approximativement selon la flèche F. On note que cette direction est oblique, vers l'arrière et vers l'extérieur. De cette manière, on assure avec la fermeté appropriée les contacts précités et par conséquent le feu est positionné en satisfaisant parfaitement aux critères mentionnés en introduction.

Plus précisément, la force F produit, autour d'un axe de rotation fictif passant par la zone d'appui de la paroi 102a contre la zone ZA, un moment qui se répercute au niveau du bord latéral 106c de la glace 106, pour intimement accoler ce bord contre le bord adjacent BG de la glace du projecteur. La force de réaction FR engendrée par ledit bord BG permet quant à elle d'assurer un appui ferme de la paroi latérale 102a du boîtier contre la zone d'appui ZA.

On notera ici un avantage particulier de la présente invention, selon lequel le principe de fixation du feu autorise des mouvements du projecteur pour réglage de son faisceau aussi bien en site qu'en azimut. Dans le cas d'un réglage en site (pivotement selon la flèche FS sur la figure 1), on assiste simplement à un glissement entre le projecteur et le feu dans leur plan de contact. Dans le cas d'un réglage en azimut (pivotement selon la flèche FA), la force élastique exercée par le ressort 120, gui plaque le feu contre le projecteur, fait en sorte que le feu accompagne en permanence les mouvements du projecteur.

## Revendications (Revendications pour l'(les) Etat(s) contractant(s) suivant(s): DE, ES, GB)

1. Dispositif de fixation d'un organe d'éclairage ou de signalisation (100) d'un véhicule automobile entre deux parties adjacentes (C2, P) du véhicule, comprenant:
- une première zone d'appui (102a, ZA) entre l'organe d'éclairage ou de signalisation et une première partie adjacente (C2), définissant un axe de rotation fictif de l'organe d'éclairage ou de signalisation et déterminant au moins en partie le positionnement correct de ce dernier par rapport à ladite première partie,
- un moyen élastique (120) capable d'appliquer à l'organe d'éclairage ou de signalisation un effort élastique (F) engendrant un moment autour dudit axe fictif,
caractérisé en ce qu'il comprend également une deuxième zone d'appui (106c, BG) entre l'organe d'éclairage ou de signalisation et la seconde partie adjacente (P), soumise à l'action dudit moment, la force de réaction (FR) exercée par ladite seconde partie adjacente assurant l'appui entre l'organe d'éclairage ou de signalisation et ladite première partie adjacente au niveau de ladite première zone d'appui, et en ce que l'effort élastique (F) est orienté dans une direction qui s'éloigne d'un plan général contenant ladite deuxième zone d'appui (106c, BG).

2. Dispositif selon la revendication 1, caractérisé en ce que l'organe d'éclairage ou de signalisation est un feu de signalisation (100) disposé à côté d'un projecteur (P) et dans une découpe (DB) d'un élément de carrosserie (C2) du véhicule, l'élément de carrosserie et le projecteur constituant respectivement lesdites première et seconde parties adjacentes.

3. Dispositif selon la revendication 2, caractérisé en ce que la première zone d'appui met en jeu une paroi latérale extérieure (102a) d'un boitier (102) du feu, appliquée dans la direction de ladite force de réaction contre une partie dimensionnée (ZA) d'un rebord (RDB) entourant ladite découpe (DB) et en ce qu'il est prévu une zone d'appui additionnelle (112, 111, RDB) entre une glace (106) du feu contre ledit rebord intérieur dans une direction essentiellement transversale à celle de ladite force de réaction.

4. Dispositif selon la revendication 3, caractérisé en ce que la glace (106) du feu s'appuie sur ledit rebord intérieur (RDB) par des bossages (112, 114) destinés à maintenir entre ladite glace et l'élément de carrosserie (C2) un espacement essentiellement constant.

5. Dispositif selon l'une des revendications 3 et 4, caractérisé en ce que ladite deuxième zone d'appui met en jeu un bord latéral (106c) de la glace du feu et un bord latéral adjacent (BG) d'une glace (G) du projecteur (P) .

6. Dispositif selon la revendication 5, caractérisé en ce que la deuxième zone d'appui s'étend dans un plan essentiellement vertical pour permettre le pivotement du projecteur (P) autour d'un axe essentiellement perpendiculaire audit plan.

7. Dispositif selon l'une des revendications 1 à 6, caractérisé en ce le moyen élastique (120) consiste en un ressort-tige d'orientation générale verticale, dont les extrémités supérieure et inférieure sont solidarisées à des points d'ancrage d'une partie fixe du véhicule et dont une région intermédiaire est reçue dans un logement (102g) solidaire d'un boîtier (102) de l'organe d'éclairage ou de signalisation, lesdits points d'ancrage et ledit logement étant positionnés pour que le ressort-tige soit sous contrainte.

8. Dispositif selon la revendication 7, caractérisé en ce que la première zone d'appui (ZA) et le logement (102g) sont situés approximativement à mihauteur de l'organe d'éclairage ou de signalisation.

9. Organe d'éclairage ou de signalisation (100), en particulier feu de signalisation, caractérisé en ce qu'il comporte un dispositif de fixation selon l'une des revendications précédentes.

## Revendications (Revendications pour l'(les) Etat(s) contractant(s) suivant(s): IT)

1. Dispositif de fixation d'un organe d'éclairage ou de signalisation (100) d'un véhicule automobile entre deux parties adjacentes (C2, P) du véhicule, comprenant:
- une première zone d'appui (102a, ZA) entre l'organe d'éclairage ou de signalisation et une première partie adjacente (C2), définissant un axe de rotation fictif de l'organe d'éclairage ou de signalisation et déterminant au moins en partie le positionnement correct de ce dernier par rapport à ladite première partie,
- un moyen élastique (120) capable d'appliquer à l'organe d'éclairage ou de signalisation un effort élastique (F) engendrant un moment autour dudit axe fictif,
caractérisé en ce qu'il comprend également une deuxième zone d'appui (106c, BG) entre l'organe d'éclairage ou de signalisation et la seconde partie adjacente (P), soumise à l'action dudit moment, la force de réaction (FR) exercée par ladite seconde partie adjacente assurant l'appui entre l'organe d'éclairage ou de signalisation et ladite première partie adjacente au niveau de ladite première zone d'appui.

2. Dispositif selon la revendication 1, caractérisé en ce que l'organe d'éclairage ou de signalisation est un feu de signalisation (100) disposé à côté d'un projecteur (P) et dans une découpe (DB) d'un élément de carrosserie (C2) du véhicule, l'élément de carrosserie et le projecteur constituant respectivement lesdites première et seconde parties adjacentes.

3. Dispositif selon la revendication 2, caractérisé en ce que la première zone d'appui met en jeu une paroi latérale extérieure (102a) d'un boitier (102) du feu, appliquée dans la direction de ladite force de réaction contre une partie dimensionnée (ZA) d'un rebord (RDB) entourant ladite découpe (DB) et en ce qu'il est prévu une zone d'appui additionnelle (112, 111, RDB) entre une glace (106) du feu contre ledit rebord intérieur dans une direction essentiellement transversale à celle de ladite force de réaction.

4. Dispositif selon la revendication 3, caractérisé en ce que la glace (106) du feu s'appuie sur ledit rebord intérieur (RDB) par des bossages (112, 114) destinés à maintenir entre ladite glace et l'élément de carrosserie (C2) un espacement essentiellement constant.

5. Dispositif selon l'une des revendications 3 et 4, caractérisé en ce que ladite deuxième zone d'appui met en jeu un bord latéral (106c) de la glace du feu et un bord latéral adjacent (BG) d'une glace (G) du projecteur (P) .

6. Dispositif selon la revendication 5, caractérisé en ce que la deuxième zone d'appui s'étend dans un plan essentiellement vertical pour permettre le pivotement du projecteur (P) autour d'un axe essentiellement perpendiculaire audit plan.

7. Dispositif selon l'une des revendications 1 à 6, caractérisé en ce le moyen élastique (120) consiste en un ressort-tige d'orientation générale verticale, dont les extrémités supérieure et inférieure sont solidarisées à des points d'ancrage d'une partie fixe du véhicule et dont une région intermédiaire est reçue dans un logement (102g) solidaire d'un boîtier (102) de l'organe d'éclairage ou de signalisation, lesdits points d'ancrage et ledit logement étant positionnés pour que le ressort-tige soit sous contrainte.

8. Dispositif selon la revendication 7, caractérisé en ce que la première zone d'appui (ZA) et le logement (102g) sont situés approximativement à mihauteur de l'organe d'éclairage ou de signalisation.

9. Organe d'éclairage ou de signalisation (100), en particulier feu de signalisation, caractérisé en ce qu'il comporte un dispositif de fixation selon l'une des revendications précédentes.

## Claims (Claims for the following Contracting State(s): DE, ES, GB)

1. A fastening device for fastening a motor vehicle lighting or indicating unit (100) between two adjacent parts (C2, P) of the vehicle, comprising:
- a first zone of engagement (102a, ZA) between the lighting or indicating unit and an adjacent first part (C2), defining a notional axis of rotation of the lighting or indicating unit and determining at least partly the correct positioning of the latter with respect to the said first part,
- a resilient means (120) capable of applying to the lighting or indicating unit a resilient force (F) giving rise to a moment about the said notional axis,
characterised in that it also includes a second zone of engagement (106c, BG) between the lighting or indicating unit and the adjacent second part (P), subjected to the action of the said moment so that the reaction force (FR) exerted by the said adjacent second part ensures engagement between the lighting or indicating unit and the said adjacent first part in the said first zone of engagement, and in that the resilient force (F) is orientated in a direction which is divergent away from a general plane containing the said second zone of engagement (106c, BG).

2. A device according to Claim 1, characterised in that the lighting or indicating unit is an indicating lamp (100) disposed, side by side with a headlamp (P), in an aperture (DB) of a bodywork element (C2) of the vehicle, the bodywork element and the headlamp constituting respectively the said first and second adjacent parts.

3. A device according to Claim 2, characterised in that the first zone of engagement defines, between an external lateral wall (102a) of a housing (102) of the lamp , a clearance extending in the direction of the said reaction force against a dimensioned portion (ZA) of a flange (RDB) surrounding the said aperture (DB), and in that an additional zone of engagement (112, 114, RDB) is provided between a cover glass (106) of the lamp against the said internal flange in a direction which is essentially transverse to that of the said reaction force.

4. A device according to Claim 3, characterised in that the cover glass (106) of the lamp hears on the said internal flange (RDB) through bosses (112, 114) for maintaining an essentially constant spacing between the said cover glass and the bodywork element (C2).

5. A device according to Claim 3 or Claim 4, characterised in that the said second zone of engagement defines a clearance between a lateral edge (106c) of the cover glass of the lamp and an adjacent lateral edge (BG) of a cover glass (G) of the headlamp (P).

6. A device according to Claim 5, characterised in that the second zone of engagement extends in an essentially vertical plane, whereby to enable the headlamp (P) to pivot about an axis which is essentially at right angles to the said plane.

7. A device according to one of Claims 1 to 6, characterised in that the resilient means (120) comprise a wire spring which is orientated generally vertically, and the upper and lower ends of which are secured to anchor points in a fixed part of the vehicle, with an intermediate region of the wire spring being received in a seating (102g) which is fixed to a housing (102) of the lighting or indicating unit, the said anchor points and the said seating being so positioned that the wire spring is prestressed.

8. A device according to Claim 7, characterised in that the first zone of engagement (ZA) and the seating (102g) are situated at approximately mid-height of the lighting or indicating unit.

9. A lighting or indicating unit (100), in particular a sidelamp display, characterised in that it includes a fastening device in accordance with one of the preceding Claims.

## Claims (Claims for the following Contracting State(s): IT)

1. A fastening device for fastening a motor vehicle lighting or indicating unit (100) between two adjacent parts (C2, P) of the vehicle, comprising:
- a first zone of engagement (102a, ZA) between the lighting or indicating unit and an adjacent first part (C2), defining a notional axis of rotation of the lighting or indicating unit and determining at least partly the correct positioning of the latter with respect to the said first part,
- a resilient means (120) capable of applying to the lighting or indicating unit a resilient force (F) giving rise to a moment about the said notional axis,
characterised in that it also includes a second zone of engagement (106c, BG) between the lighting or indicating unit and the adjacent second part (P), subjected to the action of the said moment so that the reaction force (FR) exerted by the said adjacent second part ensures engagement between the lighting or indicating unit and the said adjacent first part in the said first zone of engagement.

2. A device according to Claim 1, characterised in that the lighting or indicating unit is an indicating lamp (100) disposed, side by side with a headlamp (P), in an aperture (DB) of a bodywork element (C2) of the vehicle, the bodywork element and the headlamp constituting respectively the said first and second adjacent parts.

3. A device according to Claim 2, characterised in that the first zone of engagement defines, between an external lateral wall (102a) of a housing (102) of the lamp , a clearance extending in the direction of the said reaction force against a dimensioned portion (ZA) of a flange (RDB) surrounding the said aperture (DB), and in that an additional zone of engagement (112, 114, RDB) is provided between a cover glass (106) of the lamp against the said internal flange in a direction which is essentially transverse to that of the said reaction force.

4. A device according to Claim 3, characterised in that the cover glass (106) of the lamp bears on the said internal flange (RDB) through bosses (112, 114) for maintaining an essentially constant spacing between the said cover glass and the bodywork element (C2).

5. A device according to Claim 3 or Claim 4, characterised in that the said second zone of engagement defines a clearance between a lateral edge (106c) of the cover glass of the lamp and an adjacent lateral edge (BG) of a cover glass (G) of the headlamp (P).

6. A device according to Claim 5, characterised in that the second zone of engagement extends in an essentially vertical plane, whereby to enable the headlamp (P) to pivot about an axis which is essentially at right angles to the said plane.

7. A device according to one of Claims 1 to 6, characterised in that the resilient means (120) comprise a wire spring which is orientated generally vertically, and the upper and lower ends of which are secured to anchor points in a fixed part of the vehicle, with an intermediate region of the wire being received in a seating (102g) which is fixed to a housing (102) of the lighting or indicating unit, the said anchor points and the said seating being so positioned that the wire spring is prestressed.

8. A device according to Claim 7, characterised in that the first zone of engagement (ZA) and the seating (102g) are situated at approximately mid-height of the lighting or indicating unit.

9. A lighting or indicating unit (100), in particular a sidelamp display, characterised in that it includes a fastening device in accordance with one of the preceding Claims.

## Patentansprüche (Patentansprüche für folgende(n) Vertragsstaat(en): DE, ES, GB)

1. Befestigungseinrichtung für die Befestigung einer Beleuchtungs- oder Signalanlage (100) eines Kraftfahrzeugs zwischen zwei angrenzenden Teilen (C2, P) des Fahrzeugs, bestehend aus:
- einem ersten Auflagebereich (102a, ZA) zwischen der Beleuchtungs- oder Signalanlage und einem ersten angrenzenden Teil (C2), der eine fiktive Drehachse der Beleuchtungs- oder Signalanlage definiert und wenigstens teilweise deren korrekte Positionierung im Verhältnis zu dem besagten ersten Teil bestimmt,
- einem elastischen Mittel (120), das auf die Beleuchtungs- oder Signalanlage eine Federkraft (F) anwenden kann, die ein Moment um die besagte fiktive Achse erzeugt,
**dadurch gekennzeichnet,** daß sie außerdem einen zweiten Auflagebereich (106c, BG) zwischen der Beleuchtungs- oder Signalanlage und dem zweiten angrenzenden Teil (P) enthält, auf den das besagte Moment einwirkt, wobei die durch den besagten zweiten angrenzenden Teil ausgeübte Rückwirkungskraft (FR) die Auflage zwischen der Beleuchtungs- oder Signalanlage und dem besagten ersten angrenzenden Teil in Höhe des besagten ersten Auflagebereichs herbeiführt und daß die Federkraft (F) in einer Richtung verläuft, die sich von einer Gesamtebene, die den besagten zweiten Auflagebereich (106c, BG) enthält, entfernt.

2. Einrichtung nach Anspruch 1 , **dadurch gekennzeichnet,** daß es sich bei der Beleuchtungs- oder Signalanlage um eine Signalleuchte (100) handelt, die neben einem Scheinwerfer (P) und in einem Ausschnitt (DB) eines Karosserieelements (C2) des Fahrzeugs angeordnet ist, wobei das Karosserieelement und der Scheinwerfer den besagten ersten bzw. zweiten angrenzenden Teil bilden.

3. Einrichtung nach Anspruch 2 , **dadurch gekennzeichnet,** daß bei dem ersten Auflagebereich eine äußere Seitenwand (102a) eines Gehäuses (102) der Leuchte zum Einsatz kommt, die in Richtung der besagten Rückwirkungskraft an einen dimensionierten Teil (ZA) einer Randleiste (RDB), welche den besagten Ausschnitt (DB) umgibt, angedrückt wird, und daß ein zusätzlicher Auflagebereich (112, 111, RDB) zwischen einem Leuchtenglas (106) und der besagten inneren Randleiste in einer Richtung vorgesehen ist, die in etwa quer zur Richtung der besagten Rückwirkungskraft verläuft.

4. Einrichtung nach Anspruch 3 , **dadurch gekennzeichnet,** daß das Leuchtenglas (106) auf der besagten inneren Randleiste (RDB) durch Vorsprünge (112, 114) zur Auflage kommt, die dazu bestimmt sind, zwischen dem besagten Leuchtenglas und dem Karosserieelement (C2) einen in etwa konstanten Abstand zu halten.

5. Einrichtung nach einem der Ansprüche 3 und 4, **dadurch gekennzeichnet,** daß bei dem besagten zweiten Auflagebereich eine Seitenkante (106c) des Leuchtenglases und eine angrenzende Seitenkante (BG) einer Streuscheibe (G) des Scheinwerfers (P) zum Einsatz kommen.

6. Einrichtung nach Anspruch 5 , **dadurch gekennzeichnet,** daß sich der zweite Auflagebereich in einer in etwa vertikalen Ebene erstreckt, um das Schwenken des Scheinwerfers (P) um eine Achse zu ermöglichen, die in etwa senkrecht zu der besagten Ebene verläuft.

7. Einrichtung nach einem der Ansprüche 1 bis 6, **dadurch gekennzeichnet,** daß das elastische Mittel (120) aus einer Stabfeder mit allgemein vertikaler Ausrichtung besteht, deren oberes und unteres Ende fest an Verankerungspunkten eines unbeweglichen Teils des Fahrzeugs angebracht sind und die mit einem Zwischenbereich in einer Aufnahme (102g) eingesetzt ist, die fest mit einem Gehäuse (102) der Beleuchtungs- oder Signalanlage verbunden ist, wobei die besagten Verankerungspunkte und die besagte Aufnahme so positioniert sind, daß die Stabfeder gespannt ist.

8. Einrichtung nach Anspruch 7 , **dadurch gekennzeichnet,** daß der erste Auflagebereich (ZA) und die Aufnahme (102g) in etwa auf halber Höhe der Beleuchtungs- oder Signalanlage angeordnet sind.

9. Beleuchtungs- oder Signalanlage (100), insbesondere Signalleuchte, **dadurch gekennzeichnet,** daß sie eine Befestigungseinrichtung nach einem der vorangehenden Ansprüche umfaßt.

## Patentansprüche (Patentansprüche für folgende(n) Vertragsstaat(en): IT)

1. Befestigungseinrichtung für die Befestigung einer Beleuchtungs- oder Signalanlage (100) eines Kraftfahrzeugs zwischen zwei angrenzenden Teilen (C2, P) des Fahrzeugs, bestehend aus:
- einem ersten Auflagebereich (102a, ZA) zwischen der Beleuchtungs- oder Signalanlage und einem ersten angrenzenden Teil (C2), der eine fiktive Drehachse der Beleuchtungs- oder Signalanlage definiert und wenigstens teilweise deren korrekte Positionierung im Verhältnis zu dem besagten ersten Teil bestimmt,
- einem elastischen Mittel (120), das auf die Beleuchtungs- oder Signalanlage eine Federkraft (F) anwenden kann, die ein Moment um die besagte fiktive Achse erzeugt,
**dadurch gekennzeichnet,** daß sie außerdem einen zweiten Auflagebereich (106c, BG) zwischen der Beleuchtungs- oder Signalanlage und dem zweiten angrenzenden Teil (P) enthält, auf den das besagte Moment einwirkt, wobei die durch den besagten zweiten angrenzenden Teil ausgeübte Rückwirkungskraft (FR) die Auflage zwischen der Beleuchtungs- oder Signalanlage und dem besagten ersten angrenzenden Teil in Höhe des besagten ersten Auflagebereichs herbeiführt.

2. Einrichtung nach Anspruch 1 , **dadurch gekennzeichnet,** daß es sich bei der Beleuchtungs- oder Signalanlage um eine Signalleuchte (100) handelt, die neben einem Scheinwerfer (P) und in einem Ausschnitt (DB) eines Karosserieelements (C2) des Fahrzeugs angeordnet ist, wobei das Karosserieelement und der Scheinwerfer den besagten ersten bzw. zweiten angrenzenden Teil bilden.

3. Einrichtung nach Anspruch 2 , **dadurch gekennzeichnet,** daß bei dem ersten Auflagebereich eine äußere Seitenwand (102a) eines Gehäuses (102) der Leuchte zum Einsatz kommt, die in Richtung der besagten Rückwirkungskraft an einen dimensionierten Teil (ZA) einer Randleiste (RDB), welche den besagten Ausschnitt (DB) umgibt, angedrückt wird, und daß ein zusätzlicher Auflagebereich (112, 111, RDB) zwischen einem Leuchtenglas (106) und der besagten inneren Randleiste in einer Richtung vorgesehen ist, die in etwa quer zur Richtung der besagten Rückwirkungskraft verläuft.

4. Einrichtung nach Anspruch 3 , **dadurch gekennzeichnet,** daß das Leuchtenglas (106) auf der besagten inneren Randleiste (RDB) durch Vorsprünge (112, 114) zur Auflage kommt, die dazu bestimmt sind, zwischen dem besagten Leuchtenglas und dem Karosserieelement (C2) einen in etwa konstanten Abstand zu halten.

5. Einrichtung nach einem der Ansprüche 3 und 4, **dadurch gekennzeichnet,** daß bei dem besagten zweiten Auflagebereich eine Seitenkante (106c) des Leuchtenglases und eine angrenzende Seitenkante (BG) einer Streuscheibe (G) des Scheinwerfers (P) zum Einsatz kommen.

6. Einrichtung nach Anspruch 5 , **dadurch gekennzeichnet,** daß sich der zweite Auflagebereich in einer in etwa vertikalen Ebene erstreckt, um das Schwenken des Scheinwerfers (P) um eine Achse zu ermöglichen, die in etwa senkrecht zu der besagten Ebene verläuft.

7. Einrichtung nach einem der Ansprüche 1 bis 6, **dadurch gekennzeichnet,** daß das elastische Mittel (120) aus einer Stabfeder mit allgemein vertikaler Ausrichtung besteht, deren oberes und unteres Ende fest an Verankerungspunkten eines unbeweglichen Teils des Fahrzeugs angebracht sind und die mit einem Zwischenbereich in einer Aufnahme (102g) eingesetzt ist, die fest mit einem Gehäuse (102) der Beleuchtungs- oder Signalanlage verbunden ist, wobei die besagten Verankerungspunkte und die besagte Aufnahme so positioniert sind, daß die Stabfeder gespannt ist.

8. Einrichtung nach Anspruch 7 , **dadurch gekennzeichnet,** daß der erste Auflagebereich (ZA) und die Aufnahme (102g) in etwa auf halber Höhe der Beleuchtungs- oder Signalanlage angeordnet sind.

9. Beleuchtungs- oder Signalanlage (100), insbesondere Signalleuchte, **dadurch gekennzeichnet,** daß sie eine Befestigungseinrichtung nach einem der vorangehenden Ansprüche umfaßt.
